# EUROPEAN PATENT APPLICATION

(11) **EP 4 216 509 A1**
(43) Date of publication of application: **26.07.2023**
(21) Application number: 21884486.8
(22) Date of filing: 07.07.2021
(51) Int. Cl.: H04L 61/00

(54) **SERVICE DATA TRANSMISSION METHOD, COMMUNICATION NETWORK, SERVICE RECEIVING DEVICE AND STORAGE MEDIUM**

(30) Priority: 31.10.2020 CN 202011197165
(71) Applicant: Huawei Technologies Co., Ltd., Shenzhen, Guangdong 518129 (CN)
(72) Inventor: ZHENG, Yu, Shenzhen, Guangdong 518129 (CN); CHEN, Wei, Shenzhen, Guangdong 518129 (CN)
(74) Representative: Pfenning, Meinig & Partner mbB
(86) International application number: PCT/CN2021/104916
(87) International publication number: WO 2022/088747

(57) **Abstract**

Embodiments of this application disclose a service data transmission method, to simplify a structure of a communication network and facilitate planning of the communication network by service planning personnel. The method in embodiments of this application includes: A service receiving device actively sends a MAC address of the service receiving device to a plurality of service sending devices that have a connection relationship with the service receiving device, and each service sending device configures local routing information based on the MAC address. The MAC address of the service receiving device does not need to be obtained based on an ARP request, avoiding a limitation on an IP address of a device port caused by the ARP request. An IP address of one device may be used to replace IP addresses of a plurality of ports of the device, simplifying a communication network.

## Description

This application claims priority to Chinese Patent Application No. 202011197165.4, filed with the China National Intellectual Property Administration on October 31, 2020 and entitled "SERVICE DATA TRANSMISSION METHOD, COMMUNICATION NETWORK, SERVICE RECEIVING DEVICE, AND STORAGE MEDIUM", which is incorporated herein by reference in its entirety.

### TECHNICAL FIELD

Embodiments of this application relate to the communication field, and in particular, to a service data transmission method, a communication network, a service receiving device, and a storage medium.

### BACKGROUND

In a communication network, a first port of a service sending device has a first internet protocol (internet protocol, IP) address. A second port of a service receiving device has a second IP address. To send service data to the service receiving device, the service sending device needs to obtain a media access control (media access control, MAC) address of the second port. A specific process is as follows: The service sending device broadcasts an address resolution protocol (address resolution protocol, ARP) request in a network segment of the first IP address based on an ARP. The request carries the second IP address. The service receiving device receives the ARP request through the second port having the second IP address, and sends the MAC address of the second port to the service sending device.

The ARP request from the service sending device can arrive only at a port in the same network segment as the first IP address. When the first port and the second port are in different network segments, the service receiving device cannot receive the ARP request through the second port, and consequently does not send the MAC address of the second port to the service sending device. In this case, the service sending device cannot obtain the MAC address of the second port, resulting in unsuccessful sending of the service data.

To implement successful sending of the service data, it needs to be ensured that each pair of a service receiving device and a service sending device has a first IP address and a second IP address that are in a same network segment. When there are a plurality of service sending devices and a plurality of service receiving devices, each service sending device needs to have a plurality of first IP addresses, that is, a plurality of first ports. Each service receiving device needs to have a plurality of second IP addresses, that is, a plurality of second ports. Each device has a plurality of ports, and a structure of the communication network is complex.

### SUMMARY

Embodiments of this application provide a service data transmission method, a communication network, a service receiving device, and a storage medium, to simplify a structure of a communication network and reduce complexity of the structure of the communication network.

According to a first aspect of embodiments of this application, a service data transmission method is provided. The method is applied to a communication network. The communication network includes n service receiving devices and m service sending devices, and both n and m are integers greater than or equal to 1. The method includes the following steps. Any one of the n service receiving devices is referred to as a first service receiving device in this embodiment of this application. The first service receiving device broadcasts a MAC address of the first service receiving device to any service sending device having a connection relationship with the first service receiving device. Specifically, the first service receiving device broadcasts a first MAC address to each of the m service sending devices. In this embodiment of this application, the MAC address of the first service receiving device is also referred to as the first MAC address. After receiving the first MAC address, each service sending device configures local routing information based on the first MAC address. At least one of the m service sending devices sends service data and the first MAC address to the first service receiving device based on the configured local routing information.

In embodiments of this application, the service sending device can receive the MAC address of the service receiving device provided that the service sending device has the connection relationship with the service receiving device. The service sending device configures the local routing information based on the MAC address of the service receiving device. The service sending device can successfully send the service data based on the local routing information. Regardless of that the service sending device obtains the MAC address of the service receiving device or that the service sending device sends the service data to the service receiving device, network segments of IP addresses of the service sending device and the service receiving device do not constitute any limitation. Each service sending device or service receiving device does not need to have a plurality of ports in different network segments, and a structure of the communication network is simpler. Planning personnel do not need to ensure that each pair of a service sending device and a service receiving device has ports in a same network segment, allowing planning more convenient.

With reference to the first aspect, in a first implementation of the first aspect of embodiments of this application, the service receiving device sends the first MAC address to each of the m service sending devices via a first data frame. The first data frame includes a first field. The first field carries the first MAC address.

In this embodiment of this application, the first MAC address is transmitted via the first field in the first data frame. A location of the first MAC address is restricted in a specific field. A non-specific field is not occupied, and impact on another communication method in the communication network is reduced.

With reference to the first implementation of the first aspect, in a second implementation of the first aspect of embodiments of this application, the communication network is an optical transport network (optical transport network, OTN). The OTN is for transmitting an OTN frame. The OTN frame includes a payload area and an overhead area. The payload area is for transmitting the service data, and the overhead area is for transmitting data other than the service data. To transmit the service data, a MAC address corresponding to the service receiving device in the payload area needs to be obtained. The service receiving device sends, to the service sending device, an OTN frame used as the first data frame. The first field in an overhead area of the OTN frame carries a MAC address corresponding to the service receiving device in a payload area, namely, the first MAC address.

In this embodiment of this application, provided that the service receiving device has the connection relationship with the service sending device, data can be sent from the service receiving device to the service sending device via the overhead area of the OTN frame. Even if an IP address corresponding to a port of the service receiving device in the payload area and an IP address corresponding to a port of the service sending device in the payload area are in different network segments, the service sending device can still receive, via the overhead area, the MAC address corresponding to the service receiving device in the payload area. Transmission of the MAC address of the service receiving device is no longer limited by a network segment of an IP address of a port. The IP address of the port can be set freely, so that difficulty of planning the IP address by a planning person is reduced.

With reference to the second implementation of the first aspect, in a third implementation of the first aspect of embodiments of this application, the first field includes at least one of a field GCC 0, a field GCC 1, or a field GCC 2.

With reference to the second implementation or the third implementation of the first aspect, in a fourth implementation of the first aspect of embodiments of this application, the first MAC address may be transmitted by using an extended protocol. Specifically, the first field carries a packet of the extended protocol. The packet of the extended protocol indicates the first MAC address. Specifically, the packet of the extended protocol includes a first data fragment. The first data fragment indicates the first MAC address.

In this embodiment of this application, the first MAC address is transmitted by extending an existing protocol. An existing communication network is slightly changed, and costs of changing a structure of the communication network are low.

With reference to the fourth implementation of the first aspect, in a fifth implementation of the first aspect of embodiments of this application, the extended protocol includes a path computation element communication protocol (path computation element communication protocol, PCEP) or a border gateway protocol (border gateway protocol, BGP).

With reference to any one of the first aspect, or the first implementation to the fifth implementation of the first aspect, in a sixth implementation of the first aspect of embodiments of this application, when there are a plurality of service receiving devices in the communication network, a quantity of messages that are for transmitting MAC addresses of the service receiving devices and that are in the communication network may be reduced by using a transit device. Specifically, the transit device receives n MAC addresses from the n service receiving devices. The n MAC addresses are different from each other, and the n MAC addresses are in one-to-one correspondence with MAC addresses of the n service receiving devices. For example, an x^{th} service receiving device is any one of the n service receiving devices. The x^{th} service receiving device sends an x^{th} MAC address to the transit device. The x^{th} MAC address is a MAC address of the x^{th} service receiving device, x is any integer greater than or equal to 1 and less than or equal to n. After receiving the n MAC addresses sent by the n service receiving devices, the transit device forwards a transit message to each service sending device. Each transit message includes the n MAC addresses, and the n MAC addresses are in one-to-one correspondence with the n receiving devices. Each service sending device configures the local routing information based on the n MAC addresses. The local routing information corresponds to the n service receiving devices. Specifically, each service sending device configures, based on the x^{th} MAC address, local routing information related to the x^{th} service receiving device.

In this embodiment of this application, if there is no transit device, the n service receiving devices send the MAC addresses of the service receiving devices to the m service sending devices, that is, a total of m*n messages need to be sent. With the transit device, the n service receiving devices need to send a total of m+n messages, to send the MAC addresses of the service receiving devices to the m service sending devices. When both m and n are integers greater than 1, m*n > m+n. The transit device sends the MAC addresses of the service receiving devices, so that a quantity of messages in the communication network can be reduced, and a bandwidth of the communication network is saved.

With reference to the sixth implementation of the first aspect, in a seventh implementation of the first aspect of embodiments of this application, the transit device sends a second data frame to each of the m service sending devices. The second data frame includes a second field. The second field indicates a MAC address of each of the n service receiving devices.

In this embodiment of this application, the MAC address of each service receiving device is transmitted via the second field in the second data frame. A location of the MAC address of each service receiving device is restricted in a specific field. A non-specific field is not occupied, and impact on another communication method in the communication network is reduced.

With reference to the seventh implementation of the first aspect, in an eighth implementation of the first aspect, the communication network is an OTN. The transit device sends, to each service sending device, an OTN frame used as the second data frame. The second field is in an overhead area of the OTN frame. The second field carries a MAC address corresponding to the service receiving device in a payload area, namely, the first MAC address.

With reference to any one of the sixth implementation to the eighth implementation of the first aspect, in a ninth implementation of the first aspect of embodiments of this application, the transit device may be at least one of the following: a software-defined networking SDN controller, a server, or a network element.

With reference to any one of the sixth implementation to the ninth implementation of the first aspect, in a tenth implementation of the first aspect of embodiments of this application, the transit device sends the n MAC addresses to a specific service sending device. Specifically, the transit device stores a mapping relationship between a service receiving device and a service sending device. The transit device sends the n MAC addresses to the service sending device that has the mapping relationship with the service receiving device.

In this embodiment of this application, the transit device does not send the MAC addresses of the n service receiving devices to a service sending device that has no mapping relationship with the service receiving device, so that the service sending devices are screened. The transit device sends the MAC addresses of the n service receiving devices to the specific service sending device, so that the quantity of messages in the communication network is reduced, and the bandwidth of the communication network is saved.

With reference to any one of the first aspect, or the first implementation to the tenth implementation of the first aspect, in an eleventh implementation of the first aspect of embodiments of this application, the MAC address and a device identifier of the service receiving device are sent together. The service sending device configures the local routing information based on the device identifier and the MAC address. Specifically, the service sending device receives the x^{th} MAC address and an x^{th} device identifier from the x^{th} service receiving device. The service sending device fills the x^{th} device identifier and the x^{th} MAC address in an ARP table. To send the service data to the x^{th} service receiving device, the service sending device queries a routing table to obtain the x^{th} device identifier, and then queries the ARP table to obtain the x^{th} MAC address.

In this embodiment of this application, the MAC address and the device identifier of the service receiving device are filled in the ARP table of the service sending device. The MAC address of the service receiving device is obtained through querying based on the device identifier, the ARP table, and the routing table. An ARP technology used in most communication networks is used. An existing communication network is slightly changed, and costs of changing a structure of the communication network are low.

With reference to the eleventh implementation of the first aspect, in a twelfth implementation of the first aspect of embodiments of this application, the device identifier of the service receiving device is an IP address of the service receiving device, and identifies the service receiving device.

In this embodiment of this application, the service receiving device is identified based on the IP address of the device, instead of IP addresses of a plurality of ports. The sending device needs to configure the routing information based on only one device IP address of the service receiving device, and does not need to configure the routing information for a plurality of ports of a same service receiving device. In the communication network, the same service receiving device does not need the plurality of ports, and the structure of the communication network is simpler. The service sending device configures the routing information by using the IP address. The IP address of the device is used to replace IP addresses of the plurality of ports, and configuration of the routing information by the service sending device is simpler. A quantity of messages that are sent in the communication network and that include the IP address of the service receiving device or the IP address of the port of the service receiving device is reduced, so that the bandwidth of the communication network is saved.

According to a second aspect of embodiments of this application, a data transmission method is provided. The method includes the following steps. Any one of n service receiving devices is referred to as a first service receiving device in this embodiment of this application. The first service receiving device broadcasts a MAC address of the first service receiving device to any service sending device having a connection relationship with the first service receiving device. Specifically, the first service receiving device broadcasts the MAC address of the first service receiving device to each service sending device in m sending devices. In this embodiment of this application, the MAC address of the first service receiving device is also referred to as the first MAC address. The first MAC address is used by each sending device to configure local routing information. The first service receiving device receives service data and the first MAC address from at least one service sending device. The at least one service sending device is at least one of the m service sending devices. The service data and the first MAC address are sent based on the configured local routing information.

For advantageous effects of in this aspect, refer to those described in the first aspect. Details are not described again.

With reference to the second aspect, in a first implementation of the second aspect of embodiments of this application, the first service receiving device sends the first MAC address to each of the m service sending devices via a first data frame. The first data frame includes a first field. The first field carries the first MAC address.

A communication network may be specifically an optical transport network OTN. The OTN is for transmitting an OTN frame. The OTN frame includes a payload area and an overhead area. The payload area is for transmitting the service data, and the overhead area is for transmitting data other than the service data. To transmit the service data, a MAC address corresponding to the receiving device in the payload area needs to be obtained. The receiving device may send the OTN frame to the sending device, where the overhead area of the OTN frame carries the MAC address corresponding to the receiving device in the payload area.

With reference to the first implementation of the second aspect, in a second implementation of the second aspect of embodiments of this application, the first service receiving device is a device in the optical transport network OTN. The service receiving device may send and receive an OTN frame. The OTN frame includes a payload area and an overhead area. The payload area is for transmitting the service data, and the overhead area is for transmitting data other than the service data. To transmit the service data, a MAC address corresponding to the service receiving device in the payload area needs to be obtained. The service receiving device sends, to the service sending device, an OTN frame used as the first data frame. The first field in an overhead area of the OTN frame carries a MAC address corresponding to the service receiving device in a payload area, namely, the first MAC address.

With reference to the second implementation of the second aspect, in a third implementation of the second aspect of embodiments of this application, the first field includes at least one of a field GCC 0, a field GCC 1, or a field GCC 2.

With reference to the second implementation or the third implementation of the second aspect, in a fourth implementation of the first aspect of embodiments of this application, the first MAC address may be transmitted by using an extended protocol. Specifically, the first field carries a packet of the extended protocol. The packet of the extended protocol indicates the first MAC address. Specifically, the packet of the extended protocol includes a first data fragment. The first data fragment indicates the first MAC address.

With reference to the fourth implementation of the second aspect, in a fifth implementation of the second aspect of embodiments of this application, the extended protocol includes a path computation element communication protocol (path computation element communication protocol, PCEP) or a border gateway protocol (border gateway protocol, BGP).

With reference to any one of the second aspect, or the first implementation to the fifth implementation of the second aspect, in a sixth implementation of the second aspect of embodiments of this application, when there are a plurality of service receiving devices, a quantity of messages used by the service receiving devices to send MAC addresses may be reduced by using a transit device. Specifically, if a quantity of service receiving devices is n, where n is an integer greater than or equal to 2, the n service receiving devices send n MAC addresses to the transit device. The n MAC addresses are different from each other, and the n MAC addresses are in one-to-one correspondence with MAC addresses of the n service receiving devices. The n MAC addresses are forwarded to each of the m service sending devices. For example, an x^{th} service receiving device is any one of the n service receiving devices. x is any integer greater than or equal to 1 and less than or equal to n. The x^{th} service receiving device sends an x^{th} MAC address to the transit device. The x^{th} MAC address is a MAC address of the x^{th} service receiving device. The x^{th} MAC address is forwarded by the transit device to the service sending device, so that the service sending device configures the local routing information based on the x^{th} MAC address.

With reference to the sixth implementation of the second aspect, in a seventh implementation of the second aspect of embodiments of this application, the transit device may be specifically at least one of the following: a software-defined networking SDN controller, a server, or a network element.

With reference to the sixth implementation or the seventh implementation of the second aspect, in an eighth implementation of the first aspect of embodiments of this application, the transit device sends the n MAC addresses to a specific service sending device. Specifically, the transit device stores a mapping relationship between a service receiving device and a service sending device. The transit device sends the n MAC addresses to the service sending device that has the mapping relationship with the service receiving device.

With reference to any one of the second aspect, or the first implementation to the eighth implementation of the second aspect, in a ninth implementation of the second aspect of embodiments of this application, the MAC address and a device identifier of the service receiving device are sent together. The device identifier and the MAC address are used by the service sending device to configure the local routing information.

With reference to the ninth implementation of the second aspect, in a tenth implementation of the second aspect of embodiments of this application, the device identifier of the service receiving device is an IP address of the service receiving device, and identifies the service receiving device.

According to a third aspect of embodiments of this application, a data transmission method is provided. The method includes the following steps.

Each of m service sending devices receives a first MAC address from a first service receiving device. The first MAC address is a MAC address of the first service receiving device. The first service receiving device is any one of n service receiving devices. The service receiving device is any device that has a connection relationship with the service sending device. After receiving the first MAC address, each service sending device configures local routing information based on the first MAC address. At least one of the m service sending devices sends service data and the first MAC address to the first service receiving device based on the configured local routing information.

For advantageous effects of this aspect, refer to those described in the first aspect. Details are not described again.

With reference to the third aspect, in a first implementation of the third aspect of embodiments of this application, each of the m service sending devices receives the first MAC address from the service receiving device via a first data frame. The first data frame includes a first field. The first field carries the first MAC address.

With reference to the first implementation of the third aspect, in a second implementation of the third aspect of embodiments of this application, the service sending device is a device in an optical transport network OTN. The service sending device may send and receive an OTN frame. The OTN frame includes a payload area and an overhead area. The payload area is for transmitting the service data, and the overhead area is for transmitting data other than the service data. To transmit the service data, a MAC address corresponding to the service receiving device in the payload area needs to be obtained. The service sending device receives, from the service receiving device, an OTN frame used as the first data frame. The first field in an overhead area of the OTN frame carries a MAC address corresponding to the service receiving device in a payload area, namely, the first MAC address.

With reference to the second implementation of the third aspect, in a third implementation of the third aspect of embodiments of this application, the first field includes at least one of a field GCC 0, a field GCC 1, or a field GCC 2.

With reference to the second implementation or the third implementation of the third aspect, in a fourth implementation of the third aspect of embodiments of this application, the first MAC address may be transmitted by using an extended protocol. Specifically, the first field carries a packet of the extended protocol. The packet of the extended protocol indicates the first MAC address. Specifically, the packet of the extended protocol includes a first data fragment. The first data fragment indicates the first MAC address.

With reference to the fourth implementation of the third aspect, in a fifth implementation of the third aspect of embodiments of this application, the extended protocol includes a path computation element communication protocol (path computation element communication protocol, PCEP) or a border gateway protocol (border gateway protocol, BGP).

With reference to any one of the third aspect, or the first implementation to the fifth implementation of the third aspect, in a sixth implementation of the third aspect of embodiments of this application, when there are a plurality of service receiving devices, a quantity of messages that are for transmitting MAC addresses of the service receiving devices and that are in the communication network may be reduced by using a transit device. Specifically, each of the m service sending devices receives a relay message from the transit device. If the quantity n of service receiving devices is an integer greater than or equal to 2, each transit message includes the n MAC addresses, and the n MAC addresses are in one-to-one correspondence with the n receiving devices. Each service sending device configures the local routing information based on the n MAC addresses. The local routing information corresponds to the n service receiving devices. Specifically, each service sending device configures, based on an x^{th} MAC address, local routing information related to an x^{th} service receiving device.

With reference to the sixth implementation of the third aspect, in a seventh implementation of the third aspect of embodiments of this application, each of the m service sending devices receives a second data frame from the transit device. The second data frame includes a second field. The second field indicates a MAC address of each of the n service receiving devices.

With reference to the seventh implementation of the third aspect, in an eighth implementation of the third aspect, the service sending device is a device in the OTN. Each service sending device receives, from the transit device, an OTN frame used as the second data frame. The second field is in an overhead area of the OTN frame. The second field carries a MAC address corresponding to the service receiving device in a payload area, namely, the first MAC address.

With reference to any one of the sixth implementation to the eighth implementation of the third aspect, in a ninth implementation of the third aspect of embodiments of this application, the transit device may be at least one of the following: a software-defined networking SDN controller, a server, or a network element.

With reference to any one of the sixth implementation to the ninth implementation of the third aspect, in a tenth implementation of the third aspect of embodiments of this application, the service sending device is specific. Specifically, the transit device stores a mapping relationship between a service receiving device and a service sending device. Only the service sending device that has the mapping relationship with the service receiving device can receive the n MAC addresses from the transit device.

With reference to any one of the third aspect, or the first implementation to the tenth implementation of the third aspect, in an eleventh implementation of the third aspect of embodiments of this application, the MAC address and a device identifier of the receiving device are received together. The service sending device configures the local routing information based on the device identifier and the MAC address. Specifically, the service sending device receives the x^{th} MAC address and an x^{th} device identifier from the x^{th} receiving device. The service sending device fills the x^{th} device identifier and the x^{th} MAC address in an ARP table. To send the service data to the x^{th} receiving device, the service sending device queries a routing table to obtain the x^{th} device identifier, and then queries the ARP table to obtain the x^{th} MAC address.

With reference to the eleventh implementation of the third aspect, in a twelfth implementation of the third aspect of embodiments of this application, the device identifier of the service receiving device is an IP address of the service receiving device, and identifies the service receiving device.

According to a fourth aspect of embodiments of this application, a computer-readable storage medium is provided. The computer-readable storage medium stores a program, and when the program is executed by a computer, the computer performs the method in the first aspect.

According to a fifth aspect of embodiments of this application, a computer-readable storage medium is provided. The computer-readable storage medium stores a program, and when the program is executed by a computer, the computer performs the method in the second aspect.

According to a sixth aspect of embodiments of this application, a computer-readable storage medium is provided. The computer-readable storage medium stores a program, and when the program is executed by a computer, the computer performs the method in the third aspect.

According to a seventh aspect of embodiments of this application, a computer program product is provided. When the computer program product runs on a computer, the computer performs the method in the first aspect.

According to an eighth aspect of embodiments of this application, a computer program product is provided. When the computer program product runs on a computer, the computer performs the method in the second aspect.

According to a ninth aspect of embodiments of this application, a computer program product is provided. When the computer program product runs on a computer, the computer performs the method in the third aspect.

In embodiments of this application, the service sending device can receive the MAC address of the service receiving device provided that the service sending device has the connection relationship with the service receiving device. The service sending device configures the local routing information based on the MAC address of the service receiving device. The service sending device can successfully send the service data based on the local routing information. Regardless of that the service sending device obtains the MAC address of the service receiving device or that the service sending device sends the service data to the service receiving device, network segments of IP addresses of the service sending device and the service receiving device do not constitute any limitation. Each service sending device or service receiving device does not need to have a plurality of ports in different network segments, and a structure of the communication network is simpler. Planning personnel do not need to ensure that each pair of a service sending device and a service receiving device has ports in a same network segment, allowing planning more convenient.

### BRIEF DESCRIPTION OF DRAWINGS

FIG. 1 is an architectural diagram of a communication network;
FIG. 2 is an architectural diagram of an optical transport network OTN;
FIG. 3 is an architectural diagram of an OTN according to an embodiment of this application;
FIG. 4 is a schematic flowchart of a data transmission method according to an embodiment of this application;
FIG. 5 is a schematic diagram of a format of an extended BGP protocol packet according to an embodiment of this application;
FIG. 6 is an architectural diagram of a communication network according to an embodiment of this application;
FIG. 7 is a schematic flowchart of a data transmission method according to an embodiment of this application;
FIG. 8 is a schematic diagram of a structure of a communication network according to an embodiment of this application;
FIG. 9 is a schematic diagram of a structure of a service receiving device according to an embodiment of this application; and
FIG. 10 is a schematic diagram of a structure of a service sending device according to an embodiment of this application.

### DESCRIPTION OF EMBODIMENTS

Embodiments of this application provide a service data transmission method, to simplify a structure of a communication network and reduce complexity of the structure of the communication network.

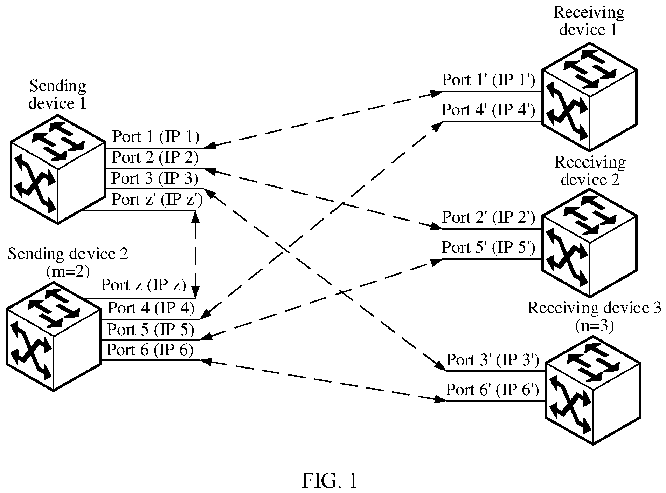

FIG. 1 is an architectural diagram of a communication network. The communication network includes a plurality of service sending devices and a plurality of service receiving devices. In the communication network, each service sending device from a service sending device 1 to a service sending device m has n ports. The n ports correspond to n IP addresses in different network segments. Each service receiving device from a service receiving device 1 to a service receiving device n has m ports. The m ports correspond to m IP addresses in different network segments.

When m=2 and n=3, each service sending device has three ports, and each service receiving device has two ports. For example, the service sending device 1 has three ports whose IP addresses are IP 1, IP 2, and IP 3. The service receiving device 1 has two ports whose IP addresses are IP 1' and IP 4'.

Service data can be transmitted provided that IP addresses in a same network segment exist between the port of the service sending device and the port of the service receiving device.

Based on this architecture, each service sending device from the service sending device 1 to the service sending device m can send a service message to each service receiving device from the service receiving device 1 to the service receiving device n. For example, the service sending device 1 in FIG. 1 may send the service data to the service receiving device 1 through a port 1 and a port 1'.

It is to be noted that a relationship between the service sending device and the service receiving device is not fixed as shown in the figure. The service sending device in FIG. 1 may alternatively serve as a service receiving device, and is configured to receive a service message from another device in the communication network. For example, when the service sending device 1 serves as a service receiving device, the service sending device 1 may receive a service message from the service receiving device 1 through the port 1 and the port 1'. The service sending devices may alternatively send data to each other. For example, the service sending device 1 may alternatively receive a service message from a service sending device 2 through a port z and a port z'.

It is to be noted that m=2 and n=3 in FIG. 1 are merely examples of a quantity of service sending devices and a quantity of service receiving devices. m and n each may be any positive integer. This is not specifically limited herein.

If all ports of all devices in the communication network are in a same network segment, each device has only one port. However, during actual application, the following problems exist. On one hand, when all the ports are in the same network segment, a quantity of ARP requests is excessively large when the ARP requests are broadcast. As a result, excessive bandwidths of the communication network are occupied. On the other hand, different devices belong to different users. The different users have different requirements for a network segment of a device port. Therefore, in the communication network, most devices have a plurality of ports.

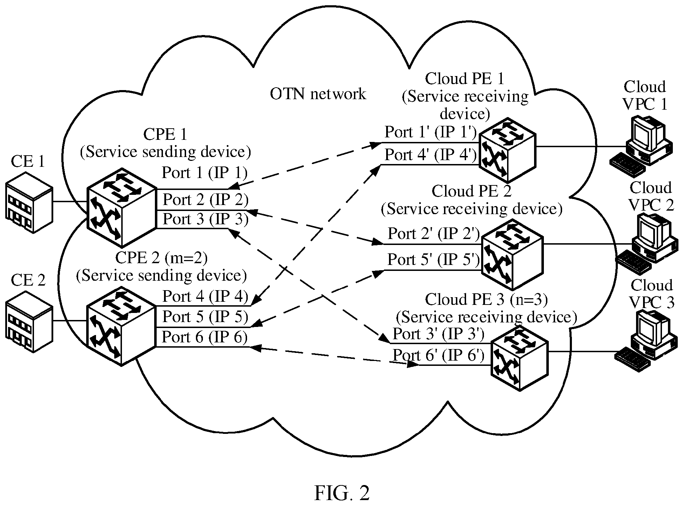

The communication network includes an optical transport network OTN. FIG. 2 is a network architectural diagram of an OTN. Data transmission between a customer edge device (customer edge, CE) device and a cloud virtual machine (virtual personal computer, VPC) may be implemented by the OTN. The OTN includes customer premise equipment (customer premise equipment, CPE) connected to the CE. The CE receives and sends service data via the CPE. The OTN further includes cloud premise equipment (premise equipment, PE) connected to the cloud VPC. The cloud VPC receives and sends service data via the cloud PE. In this embodiment of this application, the cloud PE is also referred to as a cloud-PE, and the cloud VPC is also referred to as a VPC.

Service data transmission from a CE 1 to a VPC 1 is used as an example. To transmit service data to the VPC 1, the CE 1 needs to use CPE 1 connected to the CE 1 and cloud PE 1 connected to the VPC 1. In this case, the CPE 1 is a service sending device, and the cloud PE 1 is a service receiving device. The CPE 1 broadcasts an ARP request through a port 1, a port 2, and a port 3, to obtain a MAC address of a port of a cloud PE. Because the ARP request is restricted by a network segment of an IP address of a port, the CPE 1 and the cloud PE 1 can transmit the service data through only the port 1 and a port 1' that have IP addresses in a same network segment.

In this embodiment of this application, the CE 1 serves as a source device of the service data, and the cloud VPC 1 serves as a receiving device of the service data. The source device is a device that is connected to the service sending device and that provides the service data for the service sending device. The receiving device is a device that is connected to the service receiving device and that receives the service data from the service receiving device. The CE 1 is only an example of the source device, and constitutes no limitation on the source device. For example, the source device may alternatively be a cloud VPC. The cloud VPC 1 is merely an example of the source device and the receiving device, and constitutes no limitation on the source device and the receiving device. For example, the service receiving device may alternatively be a CE.

For a service sending device, to send the service data to a plurality of service receiving devices, the service sending device needs to have a plurality of IP addresses in different network segments. In other words, the service sending device needs to have a plurality of ports. The same applies to the service receiving device. For each pair of a service receiving device and a service sending device, a port of the service sending device and a port of the service receiving device need to have IP addresses in a same network segment. From a perspective of a communication network, each device has a plurality of ports, and a structure of the communication network is complex. From a perspective of a planning person, that the port of the service sending device and the port of the service receiving device have the IP addresses in the same network segment needs to be ensured, planning difficulty is high.

To resolve the foregoing problem, an embodiment of this application provides a service data transmission method. A MAC address of a service receiving device is broadcast to a service sending device, to transmit service data. When the service receiving device accesses a communication network or a topology of a communication network changes, the service receiving device actively sends the MAC address of the service receiving device to all service sending devices that have a connection relationship with the service receiving device. All the service sending devices store the MAC address of the service receiving device, and can send the service data to the service receiving device.

It is to be noted that broadcasting in this embodiment of this application is an action of sending same data to devices. A quantity of devices may be more than one or more than two. Specifically, in this embodiment of this application, broadcasting is an action of sending a MAC address to service sending devices. The MAC address is the MAC address of the service receiving device. A quantity of service sending devices may be more than one or more than two.

In this embodiment of this application, the communication network includes m service sending devices and n service receiving devices. The service receiving device is configured to receive the service data, and the service sending device is configured to send the service data. Both m and n are integers greater than or equal to 1, and m may alternatively be an integer greater than or equal to 2.

The data transmission method provided in this embodiment of this application may be applied to an optical transport network OTN. In addition to the OTN, the data transmission method provided in this embodiment of this application may alternatively be applied to another communication network, for example, an automatically switched optical network (automatically switched optical network, ASON) or a packet transport network (packet transport network, PTN). This is not limited herein. In this embodiment of this application, an example in which the method is applied to an OTN is used for description.

In this embodiment of this application, the foregoing method may be implemented by extending an existing point-to-point reliable transmission protocol. In this embodiment of this application, an extended point-to-point reliable transmission protocol is also referred to as an extended protocol.

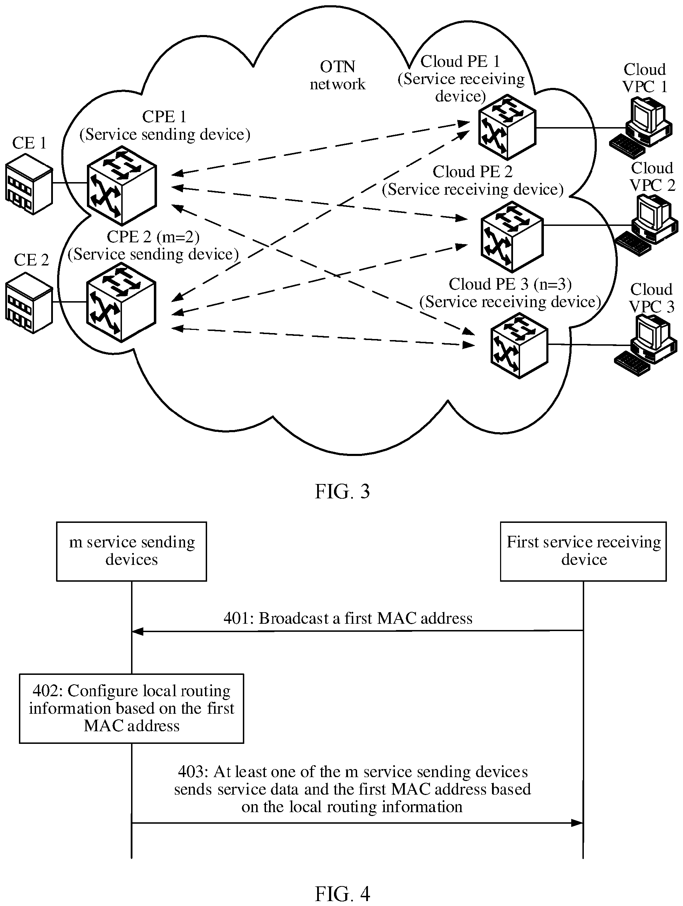

FIG. 3 is an architectural diagram of an OTN according to an embodiment of this application. Because an IP address of a port does not need to be used in the method provided in this embodiment of this application, a port of a device is not needed in the network architecture in FIG. 3. In comparison with the architecture of the communication network shown in FIG. 1 or FIG. 2, the port of the device does not need to be set in the architecture of the communication network in FIG. 3. The architecture of the communication network in FIG. 3 is simpler, and complexity of a structure of the communication network is low. Based on the network architecture shown in FIG. 3, a method shown in FIG. 4 may be implemented.

In this embodiment of this application, a service receiving device may be CPE in the OTN, and a service sending device may be cloud PE in the OTN. Alternatively, the service receiving device may be cloud PE, and the service sending device may be CPE. Alternatively, the service receiving device may be first CPE, and the service sending device may be second CPE. Alternatively, the service receiving device may be first cloud PE, and the service sending device may be second cloud PE. This is not specifically limited herein.

In this embodiment of this application, the CPE serves as the service receiving device, and the cloud PE serves as the service sending device. This embodiment of this application is merely an example of the service receiving device and the service sending device, and constitute no limitation on the service receiving device and the service sending device.

The following uses an example in which the communication network is an OTN and the extended protocol is a border gateway protocol BGP. Refer to FIG. 4. Based on the OTN architecture shown in FIG. 3, a procedure of a data transmission method provided in an embodiment of this application includes the following steps.

401: A first service receiving device broadcasts a first MAC address to m service sending devices.

The service receiving device may send and receive an OTN frame through the OTN. The OTN frame includes an overhead area and a payload area. The payload area carries service data. The overhead area is also referred to as control overheads, and carries routing information of the service data and routing information of a device. Data transmission of the control overheads is not limited by an IP address or a MAC address of the device. The service receiving device may send, via the control overheads, data to all devices that have a connection relationship with the service receiving device. In this embodiment of this application, a device that has the connection relationship with the service receiving device and can send the service data to the service receiving device is referred to as a service sending device. Specifically, if the network includes n service receiving devices and the m service sending devices, where both m and n are integers greater than or equal to 1, the first service receiving device is any one of the n service receiving devices. The following describes the method in this embodiment of this application by using cloud PE 1 as the first service receiving device.

In this embodiment, the cloud PE 1 is used as an example to describe all service receiving devices. The cloud PE 1 constitutes no limitation on the service receiving device.

When the cloud PE 1 just accesses a communication network or a topology of a communication network changes, the cloud PE 1 may broadcast a first data frame to any CPE that has a connection relationship with the cloud PE 1. The first data frame carries a MAC address of the cloud PE 1.

Specifically, a quantity of CPEs is m, and m CPEs represent all service sending devices that have the connection relationship with the cloud PE 1 and that are in the communication network.

In this embodiment, the first data frame is an OTN frame. When the method in this embodiment of this application is applied to another communication network, the first data frame may be a data frame corresponding to the communication network. This is not limited herein.

In this embodiment of this application, the MAC address of the service receiving device is also referred to as the first MAC address.

In this embodiment of this application, the first MAC address may be broadcast by using a packet of an extended protocol. Specifically, the packet of the extended protocol, such as a BGP packet, includes a first data fragment, where the first data fragment indicates the first MAC address. The packet of the extended protocol may be carried in a first field of the first data frame. The first MAC address is used by the service sending device to configure local routing information related to the service receiving device. In addition to the BGP packet, the packet of the extended protocol may alternatively be a packet of another extended protocol, for example, a PCEP packet. This is not specifically limited herein.

In this embodiment of this application, if A carries B, it indicates that A is a location for placing B, but A may not completely accommodate B. Therefore, there may be one or more As. Provided that A can place content of B, A carries B. For example, the first field carries the BGP packet. In this case, content of one BGP packet may be placed in a plurality of first fields, and each first field is for placing a part of the content of the BGP packet.

Specifically, when the first data frame is an OTN frame, the first field may be a GCC 0 in an overhead area of the OTN frame, or the first field may be another field in the overhead area of the OTN frame, for example, a GCC 1 or a GCC 2. This is not specifically limited herein. When the first data frame is a data frame of another communication network, the first field is correspondingly a field of the data frame of the another communication network. This is not specifically limited herein.

Refer to Table 1. In an existing BGP protocol, a BGP packet supports carrying a path attributes (path attributes) object. The path attributes object includes a routing destination address and NEXT_HOP that indicates a next-hop IP address. Specifically, in the scenario shown in FIG. 2, if a path attribute is a routing destination address, corresponding path attributes content is an IP address of a VPC. If a path attribute is NEXT_HOP, path attributes content is an IP address of a first port of a receiving device.

**Table 1 Existing BGP packet**

| Path attributes object | Path attributes content |
|---|---|
| Routing destination address | IP address of a VPC |
| NEXT_HOP | IP address of a first port |

In the existing BGP protocol, the BGP packet does not support carrying a MAC address. In addition, in the BGP protocol, no specific data fragment is specified to indicate the MAC address. In this embodiment of this application, it is specified, by using the extended protocol, that the first data fragment in the packet of the extended protocol indicates the MAC address of the service receiving device. In this way, the MAC address of the service receiving device is transmitted.

Refer to Table 2. The BGP protocol is extended in this embodiment of this application. A new path attribute is added to an extended BGP packet. The newly added path attribute is NEXT_HOP_MAC, indicating a MAC address of a next hop. NEXT_HOP_MAC is present together with the attribute NEXT_HOP in the BGP packet. In this embodiment of this application, NEXT_HOP_MAC is the first data fragment.

**Table 2 Extended BGP packet in this embodiment of this application**

| Path attributes object | Path attributes content |
|---|---|
| Routing destination address | IP address of a VPC |
| NEXT_HOP | First IP address |
| NEXT_HOP_MAC | First MAC address |

All BGP packets in the method shown in this embodiment of this application are extended BGP packets.

Specifically, when the cloud PE 1 sends the BGP packet, the path attributes content of the path attribute NEXT_HOP in the packet is filled with an IP address of the cloud PE 1, and the path attributes content of the path attribute NEXT_HOP_MAC is filled with a MAC address of the cloud PE 1. The IP address herein is a device identifier of the cloud PE 1, and is also referred to as the first IP address. The device identifier identifies the receiving device. The MAC address herein is the MAC address of the cloud PE 1, and is also referred to as the first MAC address. The first MAC address is a MAC address of the receiving device. In this embodiment of this application, a field for filling the first MAC address in the packet of the extended protocol may also be referred to as a second field.

In this embodiment of this application, the first IP address may be an ID number of the receiving device, or may be another device identifier identifying the receiving device, for example, a manually configured identification number. This is not specifically limited herein.

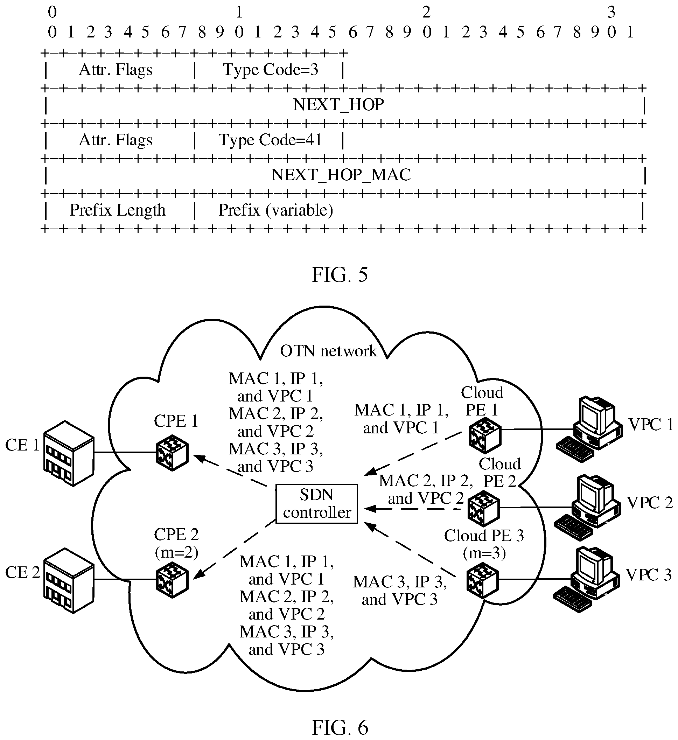

A format of the extended BGP packet may be shown in FIG. 5. FIG. 5 is a schematic diagram of a format of an extended BGP protocol packet according to an embodiment of this application. Attr. Flags in FIG. 5 indicates a flag bit of a path attribute. Type Code indicates a type of the path attribute. Type Code 3 is NEXT_HOP, and Type Code 41 is NEXT_HOP_MAC. Prefix Length indicates a length of a prefix of a routing destination address. Prefix indicates a value of the prefix of the routing destination address.

The packet format shown in FIG. 5 is merely an example, and constitute no limitation on the extended BGP packet and the packet of the extended protocol.

402: Each of the m service sending devices configures local routing information based on the first MAC address.

In this embodiment, the service sending devices may include the CPE 1 and the CPE 2 in FIG. 3, and the service receiving devices may include the cloud PE 1, the cloud PE 2, and the cloud PE 3 in FIG. 3.

For example, after receiving the BGP packet sent by the cloud PE 1, each of the m CPEs configures local routing information related to the cloud PE 1, in other words, stores a mapping relationship between the first MAC address and the first IP address. Specifically, each CPE may store, in an ARP table of the CPE, the mapping relationship between the first IP address and the first MAC address in the BGP packet. In other words, the first IP address and the first MAC address are filled in the ARP table. The local routing information related to the cloud PE 1 may alternatively exist in another form. For example, a mapping relationship between the first MAC address and the routing destination address, namely, a mapping relationship between the first MAC address and an IP address of the VPC 1 is stored locally. This is not specifically limited herein. The VPC 1 is a device that is connected to the cloud PE 1 and that is configured to receive the service data.

In this embodiment of this application, the ARP table is stored in a memory of the CPE instead of a cache. Therefore, once the mapping relationship between the first IP address and the first MAC address is stored, the mapping relationship is not overwritten by new data in the cache of the CPE. After this step, the CPE may obtain the first MAC address based on the mapping relationship stored in the memory, and does not need to obtain the first MAC address by using another method, for example, by broadcasting an ARP request. The first MAC address is obtained by querying the ARP table stored in the memory. In this method, a success rate of obtaining the first MAC address is high.

Optionally, the CPE may further store a mapping relationship between the first IP address and the routing destination address in the BGP packet in a routing table of the CPE, that is, fill the routing table with the first IP address and the routing destination address. In this embodiment of this application, the mapping relationship between the first IP address and the routing destination address in the routing table may alternatively be obtained in another manner in addition to the packet of the extended protocol. For example, the mapping relationship between the first IP address and the routing destination address is manually configured. This is not specifically limited herein.

In an example, this step further includes: The service sending device receives the service data and the IP address of the cloud VPC. Specifically, when a CE needs to send the service data to a cloud VPC, for example, the CE 1 needs to send the service data to the cloud VPC 1, the CPE 1 connected to the CE 1 may receive the foregoing service data and an IP address of the cloud VPC 1 from the CE 1, indicating that a receiver of the service data is the cloud VPC 1.

It is to be noted that, in this embodiment of this application, the CE 1 and the cloud VPC 1 are only used as examples, and constitute no limitation on a source and a destination of the service data.

In an example, after the MAC address sent by the service receiving device is received, this step may further include: The service sending device determines the first MAC address.

For example, after obtaining the IP address of the cloud VPC 1, the CPE 1 may use the IP address of the cloud VPC 1 as the routing destination address, and query the routing table to obtain an IP address of the cloud PE 1 corresponding to the IP address of the cloud VPC 1, namely, the foregoing first IP address.

The CPE 1 then queries the ARP table stored in the memory to obtain the first MAC address corresponding to the first IP address. In this embodiment, the first MAC address is the MAC address of the cloud PE 1.

If the routing information configured by the CPE in step 302 is the mapping relationship between the first MAC address and the VPC, the CPE may directly determine the first MAC address based on the mapping relationship and the IP address of the VPC. This is not specifically limited herein.

403: At least one of the m service sending devices sends service data and the first MAC address to the first service receiving device based on the local routing information.

In this embodiment, the service sending devices may include the CPE 1 and the CPE 2 in FIG. 3, and the service receiving devices may include the cloud PE 1, the cloud PE 2, and the cloud PE 3 in FIG. 3.

For example, after obtaining the first MAC address, the CPE 1 sends the service data and the first MAC address to the cloud PE 1. Specifically, the CPE 1 may fill the payload area of the OTN frame with the service data obtained from the CE 1. Then, the routing destination address and the next-hop MAC address are filled in the control overheads of the OTN frame.

Specifically, an object corresponding to the routing destination address in the control overheads may be filled with the IP address of the cloud VPC 1. An object corresponding to the next-hop IP address in the control overheads is filled with the first IP address. An object corresponding to the next-hop MAC address in the control overheads is filled with the first MAC address.

The CPE 1 sends the OTN frame to the cloud PE 1.

In an example, after the MAC address sent by the service receiving device is received, this step may further include: The service receiving device transmits the service data to the cloud VPC.

For example, the cloud PE 1 receives the OTN frame, and verifies that the first MAC address carried in the control overheads of the OTN frame is the MAC address of the cloud PE 1, to determine that the OTN frame is sent to the cloud PE 1.

Then, the cloud PE 1 determines, based on the IP address of the VPC 1 carried in the control overheads of the OTN frame, that a receiver of the OTN frame is the cloud VPC 1, to transmit the service data to the cloud VPC 1.

In this embodiment of this application, a quantity of service receiving devices is not limited to one, and there may be a plurality of service receiving devices. For a correspondence of each receiving device and an action performed by each receiving device, refer to the cloud PE 1. Details are not described herein again.

In this embodiment of this application, all the m service sending devices configured with the local routing information may send a service message to the service receiving device. For a process in which any one of the m service sending devices sends the service message to the service receiving device, refer to a process in which the CPE 1 sends the service message. Details are not described herein again.

In embodiments of this application, the service sending device can receive the MAC address of the service receiving device provided that the service sending device has the connection relationship with the service receiving device. The service sending device configures the local routing information based on the MAC address of the service receiving device. The service sending device can successfully send the service data based on the local routing information stored locally. Regardless of that the service sending device obtains the MAC address of the service receiving device or that the service sending device sends the service data to the service receiving device, network segments of IP addresses of the service sending device and the service receiving device do not constitute any limitation. Each service sending device and each service receiving device do not need to have a plurality of ports in different network segments, and a structure of the communication network is simpler. Planning personnel do not need to ensure that each pair of a service sending device and a service receiving device has ports in a same network segment, allowing planning more convenient.

In addition, the IP address of the service receiving device may be directly used to identify the service receiving device. The planning person does not need to plan an IP address of a port of each service receiving device, so that an operation step of the planning person in the communication network is reduced, and an automation of the communication network is improved.

In this embodiment of this application, the service sending device locally stores the MAC address of the service receiving device. When the service sending device sends the service data to the service receiving device, the MAC address of the service receiving device may be directly obtained locally without obtaining the MAC address from another device. A bandwidth of the communication network is saved, and a delay is simultaneously reduced.

In the embodiment shown in FIG. 4, extension of the BGP packet is also applicable to a PCEP protocol, and newly added path attributes objects are both NEXT_HOP_MAC. Usage of an extended PCEP packet is the same as that of the extended BGP packet in the embodiment shown in FIG. 4. Details are not described herein again.

It is to be noted that only the OTN architecture shown in FIG. 3 and the method shown in FIG. 4 are used as examples in this embodiment of this application. The service data transmission method provided in this embodiment of this application is not limited to the OTN network, and may be alternatively applied to another communication network, for example, an ASON or a PTN. This is not specifically limited herein.

When a plurality of service sending devices and a plurality of service receiving devices exist in the communication network, the MAC address of the service receiving device may be transmitted by using a transit device, to reduce a quantity of messages in the communication network.

In this embodiment of this application, the transit device is configured to reduce a quantity of messages for transmitting the MAC address of the service receiving device in the communication network. The transit device may be specifically a software-defined networking (software-defined networking, SDN) controller. Alternatively, the transit device may be another device, for example, a server or a network element. This is not specifically limited herein. In this embodiment of this application, the SDN controller is merely used as an example, and constitutes no limitation on the transit device.

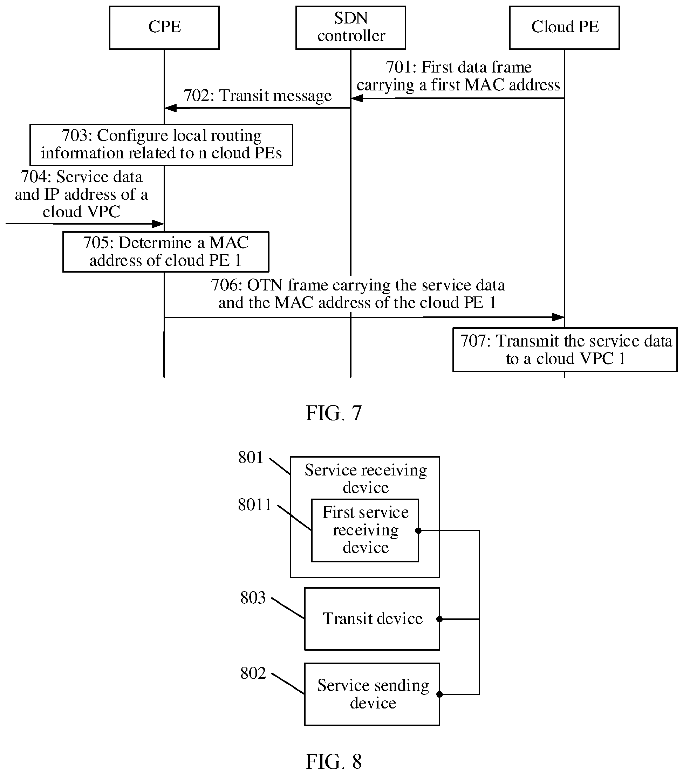

FIG. 6 is an architectural diagram of a communication network according to an embodiment of this application. In this architecture, a transit device is used to reduce a quantity of message for transmitting a first MAC address in a communication network. The communication network includes m CPEs and n cloud PEs. Both m and n are integers greater than 1. Based on the network architecture shown in FIG. 6, a method shown in FIG. 7 may be implemented.

It is to be noted that the CPE and the cloud PE in this embodiment of this application are merely examples of a service sending device and a service receiving device, and constitute no limitation. For details about possibilities of the service sending device and the service receiving device, refer to the embodiment shown in FIG. 4. Details are not described herein again.

FIG. 7 is a schematic flowchart of a data transmission method according this application. Refer to FIG. 7. Based on the architecture of the communication network shown in FIG. 6, a procedure of a data transmission method provided in an embodiment of this application includes the following steps.

701: n cloud PEs send, to an SDN controller, a first data frame carrying a first MAC address.

When the n cloud PEs just accesses a communication network or a topology of a communication network changes, each of the n cloud PEs sends, to the SDN controller, the first data frame carrying the first MAC address. The first data frame sent by each service receiving device carries a MAC address of the service receiving device, namely, the first MAC address. In other words, the SDN controller receives n MAC addresses from the n cloud PEs. The n MAC addresses are different from each other, and the n MAC addresses are in one-to-one correspondence with the n cloud PEs. For example, x^{th} cloud PE in the n cloud PEs sends the first data frame to the SDN controller. The frame carries a MAC address and an IP address of the x^{th} cloud PE, and an IP address of a VPC connected to the x^{th} cloud PE. The x^{th} cloud PE is any one of the n cloud PEs.

Specifically, the first MAC address may be transmitted via a packet of an extended protocol, such as a BGP protocol. For details, refer to step 401 in the embodiment shown in FIG. 4. Details are not described herein again.

In this embodiment of this application, a message including the MAC address of the service receiving device may also be referred to as a routing message. Cloud PE 1 is used as an example. The cloud PE 1 sends, to the SDN controller, a routing message that includes MAC 1, IP 1, and VPC 1, where MAC 1 is a MAC address of the cloud PE 1, IP 1 is an IP address of the cloud PE 1, and VPC 1 is an IP address of a VPC 1.

702: The SDN controller broadcasts a transit message to the m CPEs.

After receiving the MAC address and the IP address of the x^{th} cloud PE and the IP address of the VPC connected to the x^{th} cloud PE that are sent by the n cloud PEs, the SDN controller broadcasts the transit message to each of the m CPEs. Each transit message includes MAC addresses and IP addresses of the n cloud PEs, and IP addresses of VPCs connected to the n cloud PEs. Specifically, the MAC address and the IP address of the x^{th} cloud PE and the IP address of the VPC connected to the x^{th} cloud PE are carried in a BGP packet. x is an integer from 1 to n.

Specifically, in this embodiment of this application, the transit message may be sent via an OTN frame. In this case, the OTN frame may also be referred to as a second data frame. The second data frame carries the MAC addresses of the n receiving devices.

For a relationship between the second data frame and the BGP packet, refer to a relationship between the first data frame and the BGP packet in step 401 in the embodiment shown in FIG. 4. Details are not described herein again. For specific locations of the MAC address and the IP address of the x^{th} cloud PE and the IP address of the VPC connected to the x^{th} cloud PE in the BGP packet, refer to the descriptions of step 401 in the implementation example in FIG. 4. Details are not described herein again.

703: Each piece of CPE configures local routing information related to the n cloud PEs.

Each piece of CPE configures the local routing information related to the n cloud PEs. Specifically, each piece of CPE configures, based on the MAC address and the IP address of the x^{th} cloud PE and the IP address of the VPC connected to the x^{th} cloud PE, routing information related to the x^{th} cloud PE. x is an integer from 1 to n.

For a specific process of configuring the routing information, refer to the embodiment shown in FIG. 4. Details are not described herein again.

704: CPE 1 receives service data and an IP address of a cloud VPC.

At least one of the n CPEs receives the service data and the IP address of the cloud VPC, where the cloud VPC is connected to one of the m cloud PEs. For example, the CPE 1 receives the service data and the IP address of the VPC 1, where the VPC 1 is connected to the cloud PE 1. The CPE 1 represents any one of the m CPEs. The cloud PE 1 represents any one of the n cloud PEs. In this embodiment of this application, the CPE 1 and the cloud PE 1 are only used as examples, and constitute no limitation on the service sending device and the service receiving device.

705: The CPE 1 determines the MAC address of the cloud PE 1.

After receiving the IP address of the VPC 1, the CPE 1 may obtain the MAC address of the cloud PE 1 based on the routing information that is related to the cloud PE 1 and that is configured in step 703. For a specific process of obtaining the MAC address of the cloud PE 1, refer to the embodiment shown in FIG. 4. Details are not described herein again.

706: The CPE 1 sends, to the cloud PE 1, an OTN frame carrying the service data and the MAC address of the cloud PE 1.

After obtaining the MAC address of the cloud PE 1, the CPE 1 sends, to the cloud PE 1, the OTN frame carrying the service data and the MAC address of the cloud PE 1. For specific locations of the service data and the MAC address in the OTN frame, refer to the embodiment shown in FIG. 4. Details are not described herein again.

707: The cloud PE 1 transmits the service data to a cloud VPC 1.

The cloud PE 1 receives the OTN frame, and verifies that the MAC address carried in control overheads of the OTN frame is the MAC address of the cloud PE 1, to determine that the OTN frame is sent to the cloud PE 1.

Then, the cloud PE 1 determines, based on the IP address of the VPC 1 carried in the control overheads of the OTN frame, that a receiver of the OTN frame is the cloud VPC 1 connected to the cloud PE 1, to transmit the service data to the cloud VPC 1.

In this embodiment of this application, if there is no transit device, the n service receiving devices send the MAC addresses of the service receiving devices to the m service sending devices, that is, a total of m*n messages need to be sent. With the transit device, the n service receiving devices need to send a total of m+n messages, to send the MAC addresses of the service receiving devices to the m service sending devices. When both m and n are integers greater than 1, m*n > m+n. The transit device sends the MAC addresses of the service receiving devices, so that a quantity of messages in the communication network can be reduced, and a bandwidth of the communication network is saved.

The following describes the communication network in embodiments of this application. Refer to FIG. 8. In an embodiment of this application, a structure of a communication network includes:
n service receiving devices 801 and m service sending devices 802, where both n and m are integers greater than or equal to 1.

The n service receiving devices 801 include a first service receiving device 8011, and the first service receiving device 8011 is any one of the n service receiving devices 801.

The first service receiving device 8011 is configured to broadcast a first MAC address to the m service sending devices 802, where the first MAC address is a MAC address of the first service receiving device 8011.

Each of the m service sending devices 802 is configured to configure local routing information based on the first MAC address.

At least one of the m service sending devices 802 is configured to send service data and the first MAC address to the first service receiving device 8011 based on the local routing information.

In an example, the first service receiving device 8011 is configured to send a first data frame to each service sending device, where the first data frame includes a first field, and the first field carries the first MAC address.

In an example, the first data frame is an OTN frame, and the first field is located in an overhead area of the OTN frame.

In an example, the first field carries a packet of an extended protocol, and the packet of the extended protocol indicates the first MAC address.

In an example, the communication network further includes a transit device 803.

The transit device 803 is configured to receive n MAC addresses from the n service receiving devices 801, where the n MAC addresses are in one-to-one correspondence with the n service receiving devices; and forward the n MAC addresses to each service sending device.

Each of the m service sending devices 802 is configured to configure the local routing information based on the n MAC addresses, where the local routing information corresponds to the n service receiving devices.

In an example, the transit device 803 is configured to send a second data frame to each service sending device, where the second data frame includes a second field, and the second field indicates a MAC address of each of the n service receiving devices.

In an example, the transit device 803 includes at least one of the following: a software-defined networking SDN controller, a server, or a network element.

In an example, the first service receiving device 8011 is configured to broadcast the first MAC address and a device identifier of the first service receiving device to the m service sending devices.

Each of the m service sending devices 802 is configured to configure the local routing information based on the first MAC address and the device identifier.

The communication network shown in FIG. 8 is configured to perform the method in the embodiment shown in FIG. 4 or FIG. 6.

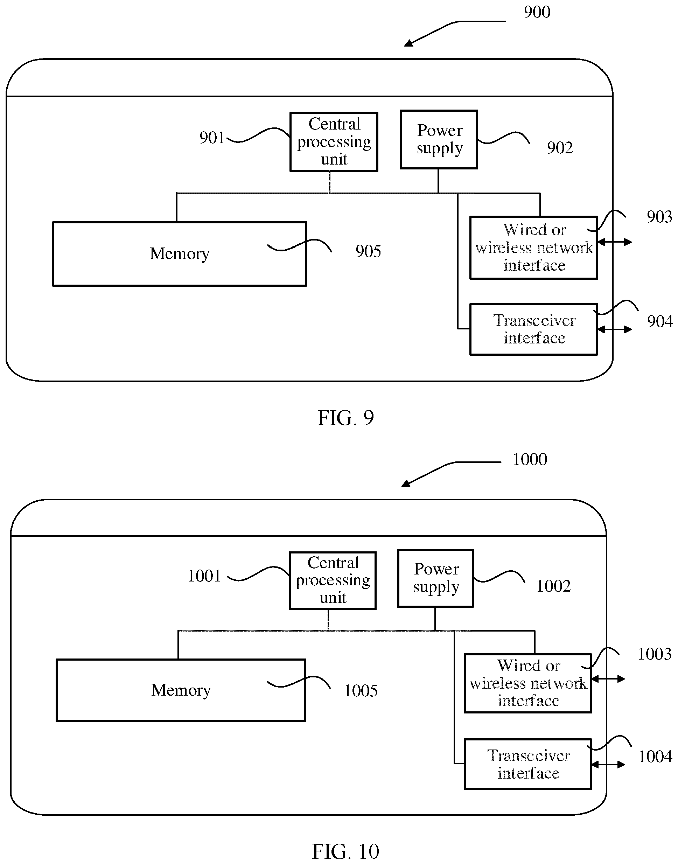

The following describes the service receiving device in embodiments of this application. FIG. 9 is a schematic diagram of a structure of a service receiving device according to an embodiment of this application. The service receiving device 900 may include one or more central processing units (central processing units, CPUs) 901 and a memory 905. The memory 905 stores one or more application programs or data.

The memory 905 may be a volatile memory or a persistent memory. The programs stored in the memory 905 may include one or more modules, and each module may include a series of instruction operations for the service receiving device. Further, the central processing unit 901 may be configured to communicate with the memory 905, and perform the series of instruction operations in the memory 905 on the service receiving device 900.

The service receiving device 900 may further include one or more power supplies 902, one or more wired or wireless network interfaces 903, one or more transceiver interfaces 904, and/or one or more operating systems such as Windows ServerTM, Mac OS XTM, UnixTM, LinuxTM, and FreeBSDTM.

The service receiving device 900 may perform operations performed by the service receiving device in the embodiment shown in FIG. 4, FIG. 6, or FIG. 7. Details are not described herein again.

The following describes the service sending device in embodiments of this application. FIG. 10 is a schematic diagram of a structure of a service sending device according to an embodiment of this application. The service sending device 1000 may include one or more central processing units (central processing units, CPUs) 1001 and a memory 1005. The memory 1005 stores one or more application programs or data.

The memory 1005 may be a volatile memory or a persistent memory. The programs stored in the memory 1005 may include one or more modules, and each module may include a series of instruction operations for the service sending device. Further, the central processing unit 1001 may be configured to communicate with the memory 1005, and perform the series of instruction operations in the memory 1005 on the service sending device 1000.

The service sending device 1000 may further include one or more power supplies 1002, one or more wired or wireless network interfaces 1003, one or more transceiver interfaces 1004, and/or one or more operating systems such as Windows ServerTM, Mac OS XTM, UnixTM, LinuxTM, and FreeBSDTM.

The service sending device 1000 may perform operations performed by the service sending device in the embodiment shown in FIG. 4, FIG. 6, or FIG. 7. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A service data transmission method, wherein the method is applied to a communication network, the communication network comprises n service receiving devices and m service sending devices, both n and m are integers greater than or equal to 1, and the method comprises:
broadcasting, by a first service receiving device, a first MAC address to the m service sending devices, wherein the first service receiving device is any one of the n service receiving devices, and the first MAC address is a MAC address of the first service receiving device;
configuring, by each of the m service sending devices, local routing information based on the first MAC address; and
sending, by at least one of the m service sending devices, service data and the first MAC address to the first service receiving device based on the local routing information.

2. The method according to claim 1, wherein the broadcasting, by a first service receiving device, a first MAC address to the m service sending devices comprises:
sending, by the first service receiving device, a first data frame to each service sending device, wherein the first data frame comprises a first field, and the first field carries the first MAC address.

3. The method according to claim 2, wherein the first data frame is an OTN frame, and the first field is located in an overhead area of the OTN frame.

4. The method according to claim 3, wherein that the first field carries the first MAC address comprises:
the first field carries a packet of an extended protocol, and the packet of the extended protocol indicates the first MAC address.

5. The method according to any one of claims 1 to 4, wherein the communication network further comprises a transit device, and the broadcasting, by a first service receiving device, a first MAC address to the m service sending devices comprises:
receiving, by the transit device, n MAC addresses from the n service receiving devices, wherein the n MAC addresses are in one-to-one correspondence with the n service receiving devices;
forwarding, by the transit device, the n MAC addresses to each service sending device; and
configuring, by each service sending device, the local routing information based on the n MAC addresses.

6. The method according to claim 5, wherein the forwarding, by the transit device, the n MAC addresses to each service sending device comprises:
sending, by the transit device, a second data frame to each service sending device, wherein the second data frame comprises a second field, and the second field indicates a MAC address of each of the n service receiving devices.

7. The method according to claim 5 or 6, wherein the transit device comprises at least one of the following: a software-defined networking SDN controller, a server, or a network element.

8. The method according to any one of claims 1 to 7, wherein the broadcasting, by a first service receiving device, a first MAC address to the m service sending devices comprises:
broadcasting, by the first service receiving device, the first MAC address and a device identifier of the first service receiving device to the m service sending devices; and
the configuring, by each service sending device, local routing information based on the first MAC address comprises:
configuring, by each service sending device, the local routing information based on the first MAC address and the device identifier.

9. A service data transmission method, wherein the method comprises:
broadcasting, by a first service receiving device, a first MAC address to m service sending devices, wherein the first service receiving device is any one of n service receiving devices, the first MAC address is a MAC address of the first service receiving device, and the first MAC address is used by each of the m service sending devices to configure local routing information; and
receiving, by the first service receiving device, service data and the first MAC address, wherein the service data and the first MAC address are sent by at least one of the m service sending devices based on the local routing information.

10. The method according to claim 9, wherein the broadcasting, by a first service receiving device, a first MAC address to m service sending devices comprises:
sending, by the first service receiving device, a first data frame to each service sending device, wherein the first data frame comprises a first field, and the first field carries the first MAC address.

11. The method according to claim 10, wherein the first data frame is an OTN frame, and the first field is located in an overhead area of the OTN frame.

12. The method according to claim 11, wherein that the first field carries the first MAC address comprises:
the first field carries a packet of an extended protocol, and the packet of the extended protocol indicates the first MAC address.

13. The method according to any one of claims 9 to 12, wherein the broadcasting, by a first service receiving device, a first MAC address to m service sending devices comprises:
sending, by the n service receiving devices, n MAC addresses to a transit device, wherein the n MAC addresses are in one-to-one correspondence with the n service receiving devices, and the n MAC addresses are forwarded to each service sending device.

14. The method according to any one of claims 9 to 13, wherein the broadcasting, by a first service receiving device, a first MAC address to m service sending devices comprises:
broadcasting, by the first service receiving device, the first MAC address and a device identifier of the first service receiving device to the m service sending devices, wherein the first MAC address and the device identifier are used by each service sending device to configure the local routing information.

15. A communication network, wherein the communication network comprises n service receiving devices and m service sending devices, both n and m are integers greater than or equal to 1, and a first service receiving device is any one of the n service receiving devices, wherein
the first service receiving device is configured to broadcast a first MAC address to the m service sending devices, wherein the first MAC address is a MAC address of the first service receiving device;
each of the m service sending devices is configured to configure local routing information based on the first MAC address; and
at least one of the m service sending devices is configured to send service data and the first MAC address to the first service receiving device based on the local routing information.

16. The communication network according to claim 15, wherein the first service receiving device is configured to send a first data frame to each service sending device, wherein the first data frame comprises a first field, and the first field carries the first MAC address.

17. The communication network according to claim 16, wherein the first data frame is an OTN frame, and the first field is located in an overhead area of the OTN frame.

18. The communication network according to claim 17, wherein that the first field carries the first MAC address comprises:
the first field carries a packet of an extended protocol, and the packet of the extended protocol indicates the first MAC address.

19. The communication network according to any one of claims 15 to 18, wherein the communication network further comprises a transit device, and the transit device is configured to receive n MAC addresses from the n service receiving devices, wherein the n MAC addresses are in one-to-one correspondence with the n service receiving devices; and
forward the n MAC addresses to each service sending device; and
each service sending device is configured to configure the local routing information based on the n MAC addresses.

20. The communication network according to claim 19, wherein the transit device is configured to send a second data frame to each service sending device, wherein the second data frame comprises a second field, and the second field indicates a MAC address of each of the n service receiving devices.

21. The communication network according to claim 18 or 19, wherein the transit device comprises at least one of a software-defined networking SDN controller, a server, or a network element.

22. The communication network according to any one of claims 15 to 21, wherein the first service receiving device is configured to broadcast the first MAC address and a device identifier of the first service receiving device to the m service sending devices; and
each service sending device is configured to configure the local routing information based on the first MAC address and the device identifier.

23. A receiving device, comprising a processor, a memory, a transceiver, and a bus, wherein
the processor, the memory, and the transceiver are connected to the bus; and
the processor is configured to perform the method according to any one of claims 9 to 14.

24. A computer-readable storage medium, wherein the computer-readable storage medium stores a program, and when a computer executes the program, the method according to any one of claims 1 to 14 is performed.
